**Europäisches Patentamt**

**European Patent Office**

**Office européen des brevets**

(19)

(11) Veröffentlichungsnummer : **0 318 541 B1**

(12) # EUROPÄISCHE PATENTSCHRIFT

(45) Veröffentlichungstag der Patentschrift :
05.08.92 Patentblatt 92/32

(51) Int. Cl.$^5$ : **G01D 5/245**

(21) Anmeldenummer : **88904944.1**

(22) Anmeldetag : **10.05.88**

(86) Internationale Anmeldenummer :
**PCT/EP88/00407**

(87) Internationale Veröffentlichungsnummer :
**WO 88/09481 01.12.88 Gazette 88/26**

(54) **VERFAHREN ZUM AUSWERTEN VON SIGNALEN EINES INKREMENTALGEBERS.**

(30) Priorität : **23.05.87 DE 3717473**

(43) Veröffentlichungstag der Anmeldung :
**07.06.89 Patentblatt 89/23**

(45) Bekanntmachung des Hinweises auf die
Patenterteilung :
**05.08.92 Patentblatt 92/32**

(84) Benannte Vertragsstaaten :
**AT BE CH DE FR GB IT LI LU NL SE**

(56) Entgegenhaltungen :
**EP-A- 0 076 861**
**EP-A- 0 155 974**
**FR-A- 2 532 132**
**US-A- 4 308 500**

(73) Patentinhaber : **Deutsche Thomson-Brandt
GmbH
Hermann-Schwer-Strasse 3 Postfach 1307
W-7730 Villingen-Schwenningen (DE)**

(72) Erfinder : **FÜLDNER, Friedrich
Wilstorfstrasse 19
W-7730 Villingen-Schwenningen (DE)**

EP 0 318 541 B1

EP 0 318 541 B1

## Beschreibung

Die vorliegende Erfindung betrifft ein Verfahren zum Auswerten von Signalen eines Inkrementalgebers. Ein Inkrementalgeber ist eine Vorrichtung, die zur digitalen Steuerung von Stellgliedern dient. Sie besteht z.B. aus einem Impulsgeber in Form einer Scheibe, auf welcher in tangentialer Richtung in gleichen Winkelabständen optisch oder mechanisch abtastbare Marken angebracht sind, die bei Bewegung der Scheibe, z.B. durch Drehen, in Zusammenwirken mit Sensoren Impulse abgeben. Zwecks Erkennung der Bewegungsrichtung der Scheibe werden zwei Sensoren verwendet, die derart versetzt angeordnet sind, so daß an zwei Ausgängen des Inkrementalgebers zwei um 90 Grad phasenverschobene Impulsreihen entstehen. Die Bewegungsrichtung kann auf diese Art durch die Phasenlage der beiden Ausgangssignale erkannt werden. Die Impulse eines der beiden Ausgänge dienen zum schrittweisen Verstellen eines Stellgliedes, welches je nach Bewegungsrichtung des Inkrementalgebers eine zu höheren oder tieferen Werten schrittweise veränderbare Steuerspannung abgibt. Die Ausgangsimpulse werden in der Weise ausgewertet, daß z.B. jede positive Flanke eine Steuergröße um einen Schritt nach oben oder nach unten verändert. Bei einfach aufgebauten Inkrementalgebern besteht der Nachteil, daß die erzeugten Impulse an ihren Flanken Störungen aufweisen, die unter dem Begriff Kontaktprellen bekannt sind. Das bedeutet, daß bei jeder positiven Flanke solcher Störimpulse das Stellglied um einen Schritt weitergeschaltet wird, daß also bei einer gleichförmigen Bewegung des Inkrementalgebers unterschiedliche Schrittweiten entstehen können, daß z.B. mehrere Schritte vorwärts sowie rückwärts ausgewertet werden, obwohl nur ein einziger Impuls erzeugt werden sollte und der Inkrementalgeber nur in einer Richtung bewegt wird.

In der US-Patentschrift 4,308,500 wird eine Schaltung beschrieben, die zur Dekodierung von Signalen eines Inkrementalgebers dient. Auch mit dieser Schaltung sollen Störungen erkannt und eliminiert werden. Es soll mit dieser Schaltung erreicht werden, daß die Ausgangsimpulse des Inkrementalgebers erst dann wirksam werden, wenn das Signal für die Drehrichtung stabil eingestellt ist. Dazu werden die Strobe-Signale verzögert. Dies geschieht mit Hilfe von Verzögerungsgliedern. Eine solche Schaltung ist aber nur geeignet, Störungen mit höherer Frequenz auszuschalten. Es handelt sich hierbei aber nicht um eine Anordnung oder um ein Verfahren, um Störimpulse, die im Bereich der Flanken der Ausgangsimpulse auftreten, zu beseitigen.

Der Erfindung liegt die Aufgabe zugrunde, bei einem einfach aufgebauten Inkrementalgeber die erzeugten stark verrauschten Schaltflanken der Impulse zu entprellen, um dadurch eine eindeutige Auswertung der Signale zu gewährleisten. Diese Aufgabe wird durch die im Patentanspruch angegebene Erfindung gelöst. Weitere Ausgestaltungen der Erfindung ergeben sich aus den Unteransprüchen.

Nachstehend wird die Erfindung an einem Ausführungsbeispiel näher erläutert.

Figur 1 zeigt Impulsdiagramme eines Inkrementalgebers welches der Erfindung zugrunde liegen.

Figur 2 zeigt ein Blockschaltbild zur Erläuterung des Verfahrens.

Figur 3 zeigt ein Detail des Blockschaltbildes nach Figur 2.

Figur 4 zeigt einen Ablaufplan zur Erläuterung des Verfahrens.

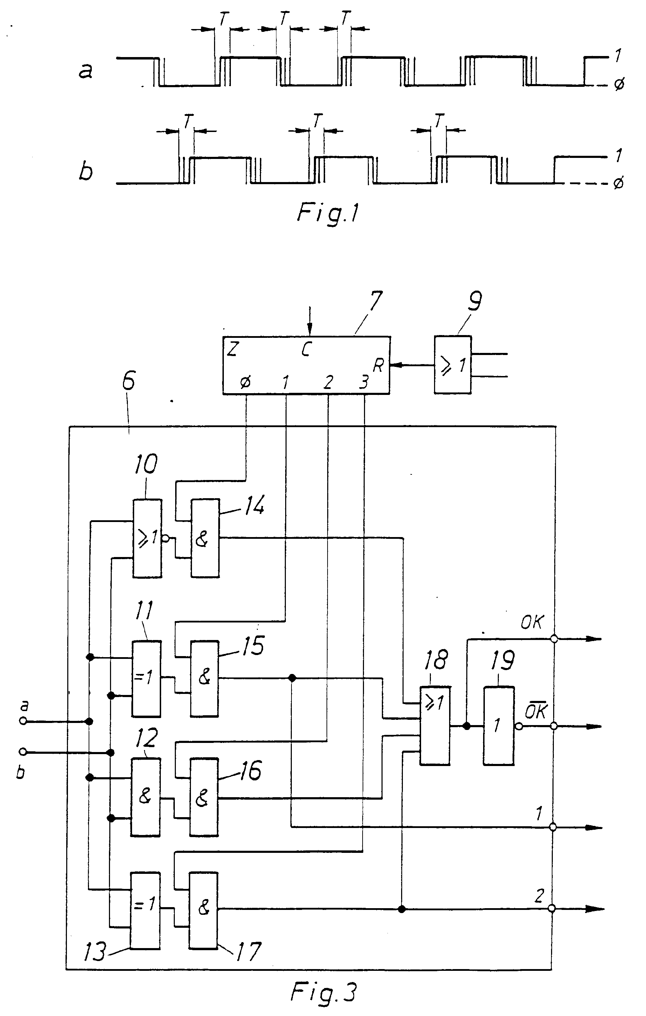

In Figur 1 ist ein Impulsdiagramm dargestellt, das die Signale an den Ausgängen A und B des Inkrementalgebers zeigt. Da es sich nach.der der Erfindung zugrunde liegenden Annahme um einen Inkrementalgeber handelt, dessen Ausgangssignale mit Prellungen behaftet sind, sind diese Signale insbesondere in den Bereichen T der Flanken gestört. Diese Prellungen erschweren eine Dekodierung, bzw. machen eine solche unmöglich, wenn nicht besondere Vorkehrungen getroffen werden. Die hierzu anzuwendenden Maßnahmen sind jedoch aufwendig. Um einen solchen Aufwand zu vermeiden, wird das nachfolgend beschriebene Verfahren angewendet.

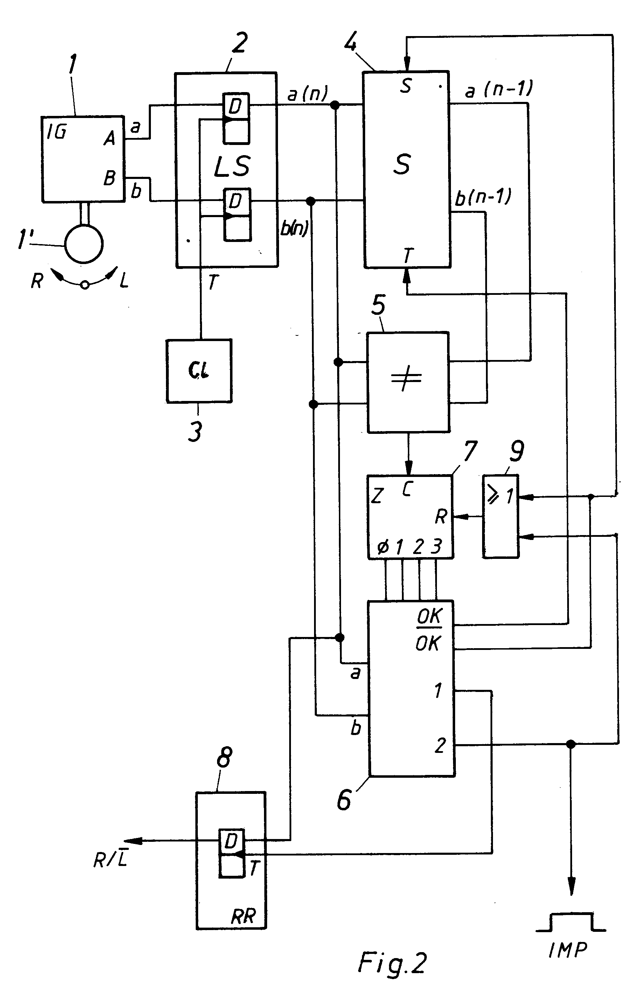

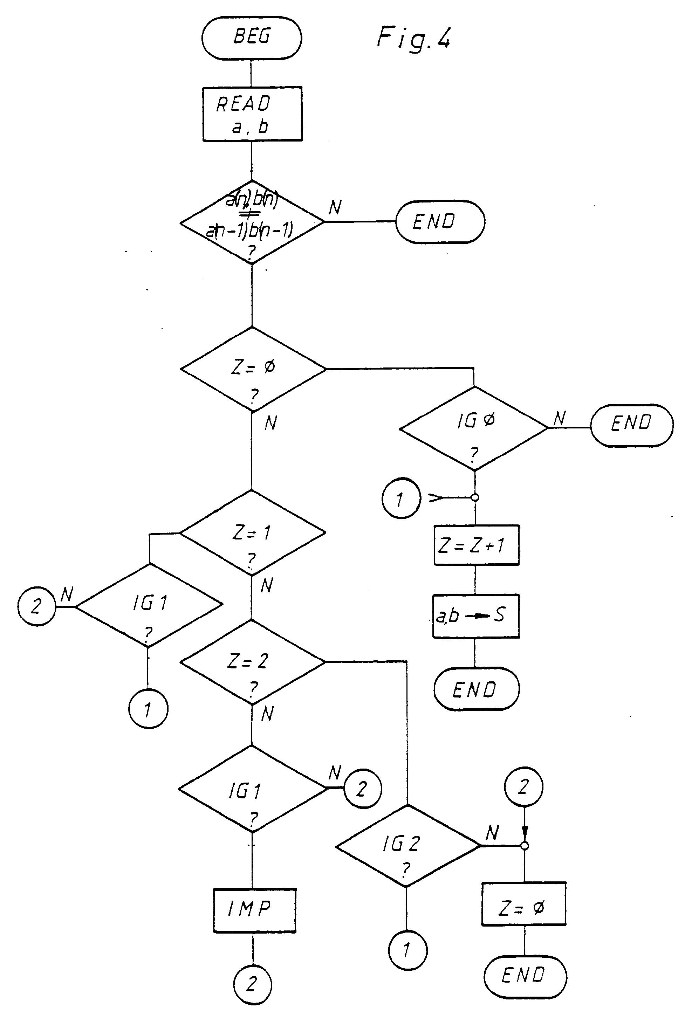

Zur Erläuterung des Verfahrensdient das Blockschaltbild nach Figur 2. Es sei darauf hingewiesen, daß der Ablauf der Verfahrensschritte leicht durch einen Mikroprozessor vollzogen werden kann, wodurch der Materialaufwand verschwindet, da das dazu notwendige Programm abgespeichert ist, was später mit Hilfe der Figur 4 gezeigt wird.

In Figur 2 ist mit 1 ein Inkrementalgeber gekennzeichnet,an dessen Ausgängen A und B die Signale a und b nach Figur 1 liegen. Der Signalverlauf nach Figur 1 entsteht nur bei Betätigen des Inkrementalgebers mit Hilfe der Handhabe 1', d.h. wenn der Inkrementalgeber 1 verstellt wird. Sonst liegen an den Ausgängen A und B beliebige Kombinationen 0 und 1 statisch an. Ein Inkrementalgeber gibt je nach Drehrichtung R bzw. L auf die Ausgänge A und B folgende Kombinationen aus: z.B. in der einen Betätigungsrichtung die Folge: 00:01:11:10:00... und in der anderen Betätigungsrichtung die Folge: 00:10:11:01:00... . Man erkennt in diesem Beispiel, daß unabhängig von der Betätigungsrichtung stets die Folge der Ausgangssignale a und b nach folgendem Schema entsteht: $a = b = 0$, $a \neq b$, $a = b = 1$, $a \neq b$, $a = b = 0$... Wird diese Folge nicht eingehalten, ist das ein Zeichen dafür, daß der Signalverlauf an einem oder an beiden Ausgängen A, B gestört ist. Dieses Kriterium wird bei dem nachfolgend beschriebenen Verfahren ausgewertet.

Die an den Ausgängen A und B liegenden Signalzustände a und b ändern sich mit einer Frequenz, die von

2

der Art der Betätigung des Inkrementalgebers 1 z.B. von der Winkelgeschwindigkeit der Handhabe 1' abhängt. Diese Signalzustände werden an einen Zwischenspeicher. 2 gegeben, der mit einer Clockfrequenz aus einem Clockgenerator 3 getriggert wird. Die Clockfrequenz soll dabei mindestens viermal so groß sein, wie die höchste vom Inkrementalgeber 1 erzeugte Signalfrequenz. Durch schnelle Betätigung des Inkrementalgebers kann dieser z.B. eine Frequenz von 5 KHz abgeben, so daß die Frequenz des Clockgenerators mindestens 20 KHz betragen sollte. Die aus dem Zwischenspeicher 2 ausgelesenen Signalzustände a(n), b(n) werden mit den Signalzuständen a(n-1), b(n-1) einer vorhergehenden Abfrage, die in einem Speicher 4 abgelegt wurden, in einer Vergleichsstufe 5 verglichen. Ob und wann die vorhergehenden Signalzustände a(n-1) und b(n-1) in dem Speicher 4 abgelegt werden, bestimmt eine Vergleichsstufe 6, die später erläutert wird. Sind die Signalzustände a(n), b(n) von den Signalzuständen a(n-1), b(n-1) verschieden, was dann der Falt ist, wenn der Inkrementalgeber verstellt wurde, wird ein Impuls an einen Zähler 7 abgegeben, der z.B. vier Zustände, 0, 1 2, 3, einnehmen kann.

Dieser Zähler 7 aktiviert über seine Ausgänge stufenweise die Vergleichsstufe 6, die die Aufgabe hat, die vorgegebene Reihenfolge der Signalzustände a, b aus dem Inkrementalgeber 1 zu überwachen. Entspricht die Reihenfolge der Vorschrift, gelangt ein Signal an den Ausgang OK. Dieses Signal gibt einen übernahmeimpuls an den Eingang T des Speichers 4, so daß der aktuelle Signalzustand mit dem nächstfolgenden zum Vergleich in der Vergleichsstufe 5 bereitgestellt wird. Entspricht die Reihenfolge nicht der Vorschrift, getangt ein Signal an den Ausgang OK. Dieses Signal setzt zum einen den Zähler 7 zurück in die Ausgangsstellung 0, zum anderen setzt es den Speicher 4 auf einen definierten Ausgangswert, z.B. 0, 1 oder 1, 0. Bei weiterem Fortschalten des Zählers 7 über ein OR-Gatter 9 wird. die Reihenfolge der Signalzustände überprüft. Bei Feststellung der Bedingung a ≠ b wird ein Richtungsregister 8, das die Änderungsrichtung des Inkrementalgebers 1 ausgibt, über den Eingang T angesteuert. Das Richtungsregi - ster 8 besteht z.B. aus einem D-Flip-Flop. Darauf überprüft die Vergleichsstufe 6 den Zustand a = b = 1. Bei dem nachfolgenden Zustand a ≠ b wird der Zähler wieder auf die Grundstellung 0 gebracht und ein störungsfreier Impuls IMP ausgegeben.

In Figur 3 ist zur Erläuterung der Wirkungsweise der Vergleichsstufe 6 in Figur 2 ein möglicher Schaltungsaufbau dargestellt. Die Signalzustände a, b werden parallel vier logischen Gattern zugeführt. Es handelt sich um das NOR-Gatter 10, das EXOR-Gatter 11, das AND-Gatter 12 und das EXOR-Gatter 13. Diese Gatter werden in zyklischer Reihenfolge von den Ausgängen 0, 1, 2, 3 des Zählers 7 über UND-Gatter 14, 15, 16, 17 durchgeschaltet. Jedesmal, wenn zum von den Ausgängen des Zählers vorgegebenen Zeitpunkten die logische Verknüpfung erfüllt ist, gelangt ein Signal über das OR-Gatter 18 an den Ausgang OK der Vergleichsstufe 6. Andernfalls erscheint am Ausgang $\overline{OK}$ der Vergleichsstufe 6 ein Signal über den Inverter 19. Wenn die vorgebene Reihenfolge eingehalten wird, erscheint jedesmal am Ausgang OK ein Signal und der Ausgang 2 gibt einen Impuls IMP ab. Bei gestörten Signalzuständen ergibt sich diese vorgegebene Reihenfolge nicht, so daß auch kein Impuls am Ausgang 2 entstehen kann.

Wie am Anfang der Beschreibung bereits darauf hingewiesen wurde, ist dieses am Schaltungsbeispiel erläuterte Verfahren in form eines Programms durchführbar, dessen Ablauf mit Hilfe der Figur 4 beschrieben wird.

Zu Beginn der Programmroutine wird der Inkrementalgeber ausgelesen und in einem darauffolgenden Schritt werden die Signalzustände mit einem vorher gespeicherten Wert verglichen. Wird Gleichheit festgestellt, springt das Programm an den Anfang zurück. Wird Ungleichheit festgestellt, was ein Zeichen für die Betätigung des Inkrementalgebers ist, wird laufend geprüft, ob die verschiedenen Zustände der richtigen Reihenfolge entsprechen. In einem ersten Vergleich wird abgefragt, ob der Zähler den Zustand Z = 0 ausgibt. In diesem fall wird geprüft, ob der Inkrementalgeber den Zustand IG0 ausgibt. Oer Zustand IG0 ist definiert als a = 0 und b = 0. Wird dieser Zustand IG0 nicht festgestellt, springt das Programm an den Anfang zurück. Wird IG0 festgestellt, wird der nächste Zustand Z = Z+1 eingestellt, und der ausgelesene Wert a, b in den Speicher 4 übernommen,und das Programm beginnt mit einer neuen Abfrage. Die neue Abfrage stellt fest, ob Z = 1 eingestellt ist. In diesem fall wird abgefragt, ob der Zustand IG1 vorliegt. IG1 bedeutet, daß die Ausgänge a, b verschieden sind. Ist dies nicht der fall, wird der Zustand Z = 0 eingestellt und das Programm springt an den Anfang zurück. Wird IG1 festgestellt, dann wird der Zustand Z = Z+1 eingestellt,und die Werte für a, b werden wiederum in den Speicher 4 eingeschrieben,und das Programm springt an den Anfang zurück. Bei erneutem Abfragen wird der Zustand Z = 2 abgefragt, bejahendenfalls wird festgestellt, ob der Zustang IG2 erreicht ist. IG2 bedeutet, daß beide Ausgänge a, b gleich 1 sind. Wird IG2 verneint, wird wieder der Zustand Z = 0 eingestellt und auf den Anfang des Programms zurückgesprungen. Wird der Zustand Z = 2 verneint, bedeutet dies, daß der Zustand Z = 3 abgefragt wird und daraufhin wird festgestellt, ob wiederum IG1 vorliegt, d.h. beide Ausgänge a, b müssen verschieden sein. Ist dies der fall, wird ein Impuls IMP ausgegeben und das Programm springt an den Anfang zurück und die Auswertung beginnt neu. Man erkennt, daß ein Impuls IMP nur dann erzeugt wird, wenn die folge der Signale a, b nach dem Schema 00:01(10):11: 10(01) vorliegt.

Derartige Inkrementalgeber dienen z.B. zur Steuerung von Stellgliedern für Lautstärke, Höhen, Tiefen oder auch Balance in einem Niederfrequenzverstärker, oder zur Frequenzeinstellung in einem Rundfunk- oder Fernsehempfänger, zur Betriebsweise eines Suchlaufs oder für Trackingsprünge beim Abtasten einer Compact-Disc in einem CD-Abspielgerät. Auch ist ein derartiger Inkrementalgeber für den Suchlauf oder zur Einstellung des Timers in einem Videorecorder vorteilhaft einsetzbar. Auch ist dieser als weiteres Beispiel als Geschwindigkeits- und Richtungsaufnehmer in Fahrzeugen aller Art gut anwendbar.

## Patentansprüche

1. Verfahren zum Auswerten von Signalen an den Ausgängen (A, B) eines Inkrementalgebers (1, 1′), wobei die Signale aus zwei phasenverschobenen Pulsen (Sa,Sb = 0 oder 1) bestehen mit einer definierten, richtungsabhängigen Signalfolge (Sa,Sb = 0,0; 0,1; 1,1; 1,0; bzw. 0,0; 1,0; 1,1; 0,1), **dadurch gekennzeichnet, daß** zur Unterscheidung zwischen Nutzimpulsen und Störimpulsen die Signale (Sa(n),Sb(n)) jeweils mit den zeitlich vorangegangenen Signalen (Sa(n-1),Sb(n-1)) verglichen werden, wobei die aufeinanderfolgenden Signale einer logischen Prüfungsbedingung unterzogen werden, ob sie der definierten Signalfolge entsprechen, und daß nur dann ein Nutzimpuls am Ausgang (A oder B) des Inkrementalgebers (1, 1′) abnehmbar ist, wenn die logische Bedingung erfüllt ist.

2. Verfahren nach Anspruch 1, **dadurch gekennzeichnet, daß** die Signale (Sa,Sb) an den Ausgängen (A,B) des Inkrementalgebers (1) periodisch abgefragt und in einem ersten Speicher (2) zwischengespeichert werden, dessen Inhalt bei Einhaltung der definierten Signalfolge an einen zweiten Speicher (4) übertragen werden.

3. Verfahren nach Anspruch 2, **dadurch gekennzeichnet, daß** die Frequenz zur Abfrage des ersten Speichers (2) mindestens vier Mal so hoch ist wie die höchste vom Inkrementalgeber erzeugte Frequenz.

4. Verfahren nach Anspruch 2, **dadurch gekennzeichnet, daß** die aus dem ersten Speicher (2) ausgelesenen Signale (Sa(n), Sb(n)) des Inkrementalgebers (1) mit den aus dem zweiten Speicher (4) ausgelesenen Signalen (Sa(n-1), Sb(n-1)) in einer Vergleichsstufe (5) verglichen werden.

## Revendications

1. Procédé pour exploiter des signaux aux sorties (A, B) d'un transmetteur incrémentiel (1, 1′), les signaux se composant de deux impulsions de phases décalées (Sa, Sb = 0 ou 1) avec une séquence de signaux définie, dépendant du sens (Sa, Sb =0,0; 0,1 : 1.1 : 1,0: ou 0, 0: 1, 0 ; 1,2: 0,1), **caractérisé en ce que,** pour distinguer les impulsions utiles des impulsions parasites, les signaux (Sa(n), Sb(n) sont comparés respectivement aux signaux qui précèdent dans le temps (Sa(n-1), Sb(n-1), les signaux qui se succèdent étant soumis à une condition de test logique pour voir s'ils correspondent à la séquence de signaux définie et qu'une impulsion utile ne peut être prélevée à la sortie (A ou B) du transmetteur incrémentiel (1, 1′) qu'à ce moment-là lorsque la condition logique est remplie.

2. Procédé selon la revendication 1, **caractérisé en ce que** le signaux (sa, Sb) sont périodiquement interrogés aux sorties (A, B) du transmetteur incrémentiel (1) et sont mémorisés temporairement dans un première mémoire (2) dont le contenu est transmis à une seconde mémoire (4) lorsque la séquence de signaux définie est respectée.

3. Procédé selon la revendication 2, **caractérisé en ce que** la fréquence pour l'interrogation de la première mémoire (2) est au moins quatre fois la plus haute fréquence produite par le transmetteur incrémentiel

4. Procédé selon la revendication 2, **caractérisé en ce que** les signaux (Sa(n), Sb(n) du transmetteur incrémentiel (1) extraits de la première mémoire (2) sont comparés dans un étage comparateur (5) aux signaux (Sa(n-1), Sb(n-1)) extraits de la seconde mémoire (4).

## Claims

1. Method for the evaluation of signals at the outputs (A, B) of an incremental transmitter (1, 1′), in which the signals consist of two phase-displaced pulses (Sa,Sb = 0 or 1) with a defined, direction-dependent signal sequence (Sa,Sb = 0;0; 0,1; 1,1; 1,0; or 0,0; 1,0; 1,1; 0,1, **characterised in that** in order to distinguish between mains pulses and disturbing pulses the signals (Sa(n),Sb(n)) are compared respectively with the signals which have come before in time (Sa(n-1),Sb(n-1)), the successive signals being subjected to a logical test condition whether they conform to the defined signal sequence, and that a mains pulse is derivable at the output (A or B) of the incremental transmitter (1, 1') only if the logical condition is fulfilled.

2. Method according to claim 1, **characterised in that** the signals (Sa,Sb) are periodically scanned at the outputs (A, B) of the incremental transmitter (1) and stored temporarily in a first storage means (2) whose contents are transferred to a second storage means (4) if the defined signal sequence is observed.

3. Method according to claim 2, **characterised in that** the frequency for the scanning of the first storage means (2) is a least four times as high as the highest frequency generated by the incremental transmitter.

4. Method according to claim 2, **characterised in that** the signals (Sa(n), (Sb(n)) of the incremental transmitter (1) read out from the first storage means (2) are compared with the signals (Sa(n-1), Sb(n-1)) read out from the second storage means (4) in a comparison stage (5).

Fig.1

Fig.3

Fig.2

Fig. 4